(19) Europäisches Patentamt
European Patent Office
Office européen des brevets

(11) **EP 4 729 265 A1**

(12) **EUROPÄISCHE PATENTANMELDUNG**

(43) Veröffentlichungstag:
**22.04.2026   Patentblatt 2026/17**

(21) Anmeldenummer: **24207601.6**

(22) Anmeldetag: **18.10.2024**

(51) Internationale Patentklassifikation (IPC):
**B29C 35/08** (2006.01)      **B29C 44/44** (2006.01)
**B29C 44/34** (2006.01)

(52) Gemeinsame Patentklassifikation (CPC):
**B29C 44/3461; B29C 44/445; C08J 9/232;**
B29C 35/0805; B29C 2035/0855; B29C 2035/0861;
B29K 2025/06; C08J 2325/06

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder:
• **Fraunhofer-Gesellschaft zur Förderung der angewandten Forschung e.V.**
**80686 München (DE)**
• **STO SE & Co. KGaA**
**79780 Stühlingen (DE)**

(72) Erfinder:
• **REES, Christian**
**76327 Pfinztal (DE)**
• **EMMERICH, Rudolf**
**76327 Pfinztal (DE)**
• **BAUER, Martin**
**97941 Tauberbischofsheim (DE)**
• **ENGELNIEDERHAMMER, Peter**
**89426 Wittislingen (DE)**
• **HITZLER, Martin G.**
**78244 Gottmadingen (DE)**

(74) Vertreter: **Lichti - Patentanwälte Partnerschaft mbB**
**Postfach 41 07 60**
**76207 Karlsruhe (DE)**

(54)   **VERFAHREN ZUR HERSTELLUNG VON PARTIKELSCHAUM-FORMTEILEN**

(57)   Es wird ein Verfahren zum Verschweißen von thermoplastischen expandierbaren Polymerschaumpartikeln zu einem thermoplastischen Partikelschaum-Formteil vorgeschlagen, indem die expandierbaren Polymerschaumpartikel mit wenigstens einer hochfrequente elektromagnetische Strahlung absorbierenden Flüssigkeit benetzt und unter Einwirkung von hochfrequenter elektromagnetischer Strahlung, insbesondere im Mikrowellenspektrum, zumindest teilweise expandiert und miteinander zu dem Partikelschaum-Formteil verschweißt werden. Um für eine hohe Verschweißungstemperatur unter Verwendung von gesundheitlich unbedenklichen strahlungsabsorbierenden Medien zu sorgen, sieht die Erfindung vor, dass die hochfrequente elektromagnetische Strahlung absorbierende Flüssigkeit aus der Gruppe der wässrigen Salzlösungen mit einem Salzanteil von wenigstens 0,5 Mass.-% gewählt wird. Darüber hinaus betrifft die Erfindung ein solchermaßen hergestelltes thermoplastisches Partikelschaum-Formteil.

**EP 4 729 265 A1**

**Beschreibung**

Die Erfindung betrifft ein Verfahren zum Verschweißen von thermoplastischen expandierbaren Polymerschaumpartikeln zu einem thermoplastischen Partikelschaum-Formteil, indem die expandierbaren Polymerschaumpartikel mit wenigstens einer hochfrequente elektromagnetische Strahlung absorbierenden Flüssigkeit benetzt und unter Einwirkung von hochfrequenter elektromagnetischer Strahlung, insbesondere im Mikrowellenspektrum, zumindest teilweise expandiert und miteinander zu dem Partikelschaum-Formteil verschweißt werden. Ferner bezieht sich die Erfindung auf ein solchermaßen hergestelltes Partikelschaum-Formteil.

Partikelschaum-Formteile aus miteinander verschweißten, expandierten Polymerschaumpartikeln aus thermoplastischen Polymeren, wie z.B. expandiertem Polystyrol (EPS), expandiertem Polyethylen (EPE), expandiertem Polypropylen (EPP) oder dergleichen, sind in vielfacher Ausgestaltung bekannt und finden üblicherweise zu Isolationszwecken gegenüber Wärme, Schall und/oder Stoßbelastung Verwendung, wie beispielsweise in Form von Dämmelementen für Gebäude, Fahrzeuge, Fluggeräte, elektrische oder elektronische Geräte etc., Verpackungsmaterialen und dergleichen.

Zur Herstellung solcher Partikelschaum-Formteile gelangen üblicherweise thermoplastische expandierbare Polymerschaumpartikel zum Einsatz, wobei es sich um geschäumte oder vorgeschäumte thermoplastische Polymerschaumpartikel handelt, welche mit Treibmittel beladen sind und sich bei Erwärmung insbesondere noch etwas ausdehnen können, so dass sie bei der Verarbeitung zu dem Partikelschaum-Formteil ihr Volumen vergrößern und unter Bildung einer relativ großen Kontaktfläche gegeneinander angedrückt werden. Die Verarbeitung zu dem Partikelschaum-Formteil geschieht in der Regel derart, dass die expandierbaren Polymerschaumpartikel in einem druckdichten Formwerkzeug, z.B. bei etwa 2 bar bis 10 bar, mit heißem Wasserdampf beaufschlagt werden, um die Polymerschaumpartikel zu ihrer endgültigen Größe zu expandieren und möglichst großflächig miteinander zu verschweißen. Sodann kann das Formwerkzeug abgekühlt und das Partikelschaum-Formteil entnommen werden.

Wenngleich derartige Heißdampfverfahren zur Herstellung von Partikelschaum-Formteilen technisch ausgereift sind und verbreitet eingesetzt werden, besteht ein Nachteil insbesondere darin, dass nur ein sehr geringer Teil der zur Erzeugung des Wasserdampfes aufgebrachten Energie in der Größenordnung von etwa 4% tatsächlich für das Expandieren bzw. Aufblähen und Verschweißen der expandierbaren Polymerschaumpartikel verwendet wird, wohingegen ein Großteil des Dampfes die Polymerschaumpartikel lediglich durchströmt, ohne nennenswert Wärme an diese abzugeben. Zudem führt das notwendige Abkühlen des Formwerkzeugs vor dem Entnehmen des fertigen Partikelschaum-Formteils zu einer weiteren energetischen Effizienzminderung.

Um insbesondere dem hohen Energieverbrauch dieser Heißdampfverfahren zu begegnen, gelangten in jüngerer Zeit auch Verfahren zur Herstellung von Partikelschaum-Formteilen zum Einsatz, bei welchen die expandierbaren Polymerschaumpartikel mit einer hochfrequente elektromagnetische Strahlung absorbierenden Flüssigkeit benetzt und unter Einwirkung von hochfrequenter elektromagnetischer Strahlung auf ihr endgültiges Volumen expandiert und miteinander zu dem Partikelschaum-Formteil verschweißt werden. Die Leistung und die Frequenz der hochfrequenten Strahlung, welchen die Polymerschaumpartikel anlässlich ihres thermischen Verschweißens zu dem Formteil exponiert werden, können hierbei entsprechend dem hochfrequente elektromagnetische Strahlung absorbierenden Medium gewählt werden, wobei sich z.B. im Falle von Wasser aufgrund dessen Resonanzfrequenz insbesondere elektromagnetische Strahlung im Mikrowellenspektrum anbietet, also in einem Frequenzbereich von etwa 300 MHz bis etwa 1 THz, insbesondere von etwa 1 GHz bis etwa 300 GHz. Ähnlich dem obigen Heißdampfverfahren werden auch hier üblicherweise die expandierbaren und mit der strahlungsabsorbierenden Flüssigkeit benetzten Polymerschaumpartikel einem druckdichten, aber für hochfrequente elektromagnetische Strahlung im jeweiligen Frequenzbereich durchlässigem Formwerkzeug aufgegeben und der Strahlung exponiert, wodurch die strahlungsabsorbierende Flüssigkeit verdampft wird und sich hierdurch sowie infolge des Expandierens der Polymerschaumpartikel ein Druck aufbaut. Dieser Druck muss hinreichend hoch sein, damit die Siedetemperatur der strahlungsabsorbierenden Flüssigkeit zumindest den Schmelztemperaturbereich der thermoplastischen Polymerschaumpartikel erreicht und letztere miteinander verschweißt werden können, wobei der Schmelztemperaturbereich der solchermaßen verarbeiteten Thermoplaste üblicherweise größer ist als die Siedetemperatur von Wasser.

Als nachteilig erweist sich demnach einerseits auch in diesem Fall ein relativ hoher Energieaufwand zur Erzeugung eines überhitzen, unter Druck stehenden Heißdampfes; andererseits ergeben sich erhebliche Kosten für das wiederum druckfeste Formwerkzeug, welches zudem aus für hochfrequente elektromagnetische Strahlung durchlässigen Materialien gefertigt sein muss, also üblicherweise aus faserverstärkten Hochleistungskunststoffen, deren Lebensdauer gleichwohl gegenüber metallenen Werkstoffen begrenzt ist, weshalb sie sich für die Serienfertigung mit hohen Durchsätzen, wie sie beispielsweise in der Dämmstoffindustrie gefordert werden, als wenig wirtschaftlich erweisen.

Die EP 0 968 803 A2 beschreibt ein gattungsgemäßes Verfahren zum Verschweißen von thermoplastischen expandierbaren Polymerschaumpartikel zu einem thermoplastischen Partikelschaum-Formteil, indem die expandierbaren Polymerschaumpartikel mit einer Mikrowellenstrahlung absorbierenden Flüssigkeit benetzt und unter Einwirkung von Mikrowellenstrahlung expandiert und miteinander zu dem Partikelschaum-Formteil verschweißt werden. Zur mehr oder minder kontinuierlichen Erzeugung von Partikelschaum-Formteilen werden hierbei die mit der strahlungsabsorbierenden Flüssigkeit benetzten Polymerschaumpartikel zwischen umlaufende Trägerbänder aufgegeben und als dichte Packung mittels der Trägerbänder an einer oder mehreren Mikrowellenstrahlungsquellen, wie Magnetrons, kontinuierlich vorbeigeführt, um sie zu dem Partikelschaum-Formteil zu verschweißen. Als Ausgangsmaterial finden insbesondere Polymerschaumpartikel aus expandiertem Polypropylen (EPP) Verwendung, welche einen Schmelztemperaturbereich von etwa 164°C besitzen, während als mikrowellenstrahlungsabsorbierende Flüssigkeiten Alkohole, insbesondere Ethylenglycol mit einem Siedepunkt von etwa 240°C, aber mit relativ hoher Flüchtigkeit, eingesetzt werden, wobei den Alkoholen übliche Additive in Form von Benetzungsmitteln oder weiteren, höher oder tiefer siedenden Flüssigkeiten zugesetzt werden können.

Als nachteilig ergeben sich vornehmlich die hohen Kosten für die strahlungsabsorbierenden Flüssigkeiten mit hinreichend hohem Siedepunkt, zumal derartige Alkohole einschließlich Ethylenglycol als gesundheitsschädlich eingestuft sind, so dass solchermaßen erzeugte Partikelschaum-Formteile für viele Anwendungsgebiete einschließlich Lebensmittelverpackungen oder Dämmstoffanwendungen mit Kontakt zu Lebewesen ausscheiden, sofern in dem Partikelschaum-Formteil Reste der Alkohole verbleiben, welche über einen langen Zeitraum aus dem Formteil heraus diffundieren.

Der Erfindung liegt die Aufgabe zugrunde, ein Verfahren zum Verschweißen von thermoplastischen expandierbaren Polymerschaumpartikeln zu einem thermoplastischen Partikelschaum-Formteil der eingangs genannten Art auf einfache und kostengünstige Weise dahingehend weiterzubilden, dass unter zumindest weitestgehender Vermeidung der vorgenannten Nachteile eine energieeffizientere Herstellung von gesundheitlich unbedenklichen Partikelschaum-Formteilen gewährleistet ist.

In verfahrenstechnischer Hinsicht wird diese Aufgabe bei einem Verfahren der eingangs genannten Art dadurch gelöst, dass die hochfrequente elektromagnetische Strahlung absorbierende Flüssigkeit aus der Gruppe der wässrigen Salzlösungen mit einem Salzanteil von wenigstens 0,5 Mass.-% gewählt wird.

In erzeugnistechnischer Hinsicht sieht die Erfindung zur Lösung dieser Aufgabe ferner ein solchermaßen hergestelltes Partikelschaum-Formteil vor, welches herstellungsbedingt Einschlüsse wenigstens eines Salzes zwischen den miteinander verschweißen Polymerschaumpartikeln enthält.

Die erfindungsgemäße Verwendung einer wässrigen Salzlösung als elektromagnetische Strahlung absorbierende Flüssigkeit stellt insoweit eine sehr kostengünstige Alternative zu bekannten strahlungsabsorbierenden Flüssigkeiten dar, wie sie bislang in gattungsgemäßen Verfahren zum Einsatz gelangen, als der erfindungsgemäße Salzanteil den Siedepunkt des Wassers erhöht, so dass das auf den Oberflächen der expandierbaren Polymerschaumpartikel aufgebrachte Wasser der Lösung während der Einwirkung von hochfrequenter elektromagnetischer Strahlung erst bei einer höheren Temperatur als die Siedetemperatur von Wasser zu sieden beginnt. Darüber hinaus bewirkt ein etwaiger, von außen an die expandierbaren Polymerschaumpartikel angelegter Druck sowie die Volumenerhöhung der während der Erwärmung expandierenden Polymerschaumpartikel eine Verengung der Zwischenräume zwischen den Polymerschaumpartikeln, was eine schnelle Abfuhr des erzeugten Wasserdampfes beim Erreichen seiner Siedetemperatur hemmt. Hierdurch steigt der Druck in diesen Zwischenräumen weiter an und wird die Siedetemperatur des Wassers weiter erhöht. Auf diese Weise kann die erforderliche Verschweißungstemperatur der Polymerschaumpartikel mit kostengünstigen, weithin verfügbaren und insbesondere gesundheitlich unbedenklichen strahlungsabsorbierenden Salzlösungen erreicht werden, so dass hierdurch erzeugte Partikelschaum-Formteile lediglich Reste von Salzen enthalten und für praktisch beliebige Anwendungen zum Einsatz gelangen können, wie z.B. als Verpackungen auch für Produkte mit hohen Anforderungen an die Hygiene, wie Verpackungen von Lebensmitteln oder beliebigen anderen Produkten, als Dämmelemente von Gebäuden, Fahr- und Flugzeugen, von Gehäusen und dergleichen.

Als erfindungsgemäß verwendete hochfrequente elektromagnetische Strahlung kann zweckmäßigerweise Strahlung im Mikrowellenspektrum zum Einsatz gelangen, also in einem Frequenzbereich von etwa 300 MHz bis etwa 1 THz, insbesondere von etwa 1 GHz bis etwa 300 GHz. Da einerseits die Resonanzfrequenz von dem erfindungsgemäß als strahlungsabsorbierendes Medium verwendeten Wasser etwa 22,2 GHz beträgt und andererseits Wasser ein hohes Absorptionsvermögen für einen breiten Frequenzbereich hochfrequenter elektromagnetischer Strahlung besitzt, können beispielsweise auch handelsübliche, für industrielle Anwendungen preiswert zur Verfügung stehende Mikrowellenquellen für Frequenzen von z.B. 915 MHz, 2,45 GHz oder 5,8 GHz verwendet werden. Die Frequenz der elektromagnetischen Strahlung kann sich folglich auch um mindestens eine Größenordnung von der obigen Resonanzfrequenz von Wasser unterscheiden und muss nicht notwendigerweise nahe dieser Resonanzfrequenz liegen.

In Bezug auf den Salzanteil der als hochfrequente elektromagnetische Strahlung absorbierende Flüssigkeit verwendeten wässrigen Salzlösungen haben sich Salzanteile von wenigstens etwa 1 Mass.-% oder von wenigstens etwa 1,5 Mass.-%, insbesondere von wenigstens etwa 2 Mass.-% oder von wenigstens etwa 2,5 Mass.-%, wie z.B. von wenigstens etwa 3 Mass.-% oder von wenigstens etwa 3,5 Mass.-%, als besonders geeignet erwiesen. Hierbei erfordert das erfindungsgemäße Verfahren insbesondere Salzgehalte, welche weit unterhalb der jeweiligen Sättigungsgrenze des jeweiligen Salzes in Wasser liegen, wobei ein Salzgehalt von höchstens etwa 30%, insbesondere von höchstens etwa 20%, vorzugsweise von höchstens etwa 10%, der Sättigungsgrenze des jeweiligen Salzes in der Regel zur entsprechenden Erhöhung der Siedetemperatur von Wasser ausreicht, da durch das schnelle Verdampfen von Wasser unter Einwirkung der hochfrequenten elektromagnetischen Strahlung die noch flüssige Salzlösung rasch aufkonzentriert wird und somit schnell die der Sättigungsgrenze entsprechende (erhöhte) Siedetemperatur erreicht. Ein gewisser Anteil an Salzlösung kann auf diese Weise über einen gewissen Zeitraum in flüssiger Form auf der Oberfläche der Polymerschaumpartikel verbleiben, dessen Salzkonzentration mit zunehmender Verdampfung von Wasser bis etwa zur Sättigungsgrenze zunimmt, wobei der verbleibende Wasseranteil der Salzlösung dann bei der unter dem jeweiligen Druck höchstmöglichen Temperatur verdampft, bis schließlich der gesamte Wasseranteil der Lösung verdampft worden ist und der Verschweißungsvorgang selbsttätig zum Stillstand gelangt, sofern der strahlungsabsorbierende Wasserdampf zumindest größtenteils aus dem gebildeten Partikelschaum-Formteil abgeführt wird.

Das oder die Salz(e) der als hochfrequente elektromagnetische Strahlung absorbierende Flüssigkeit verwendeten wässrigen Salzlösung wird vorzugsweise derart gewählt, dass der Dampfdruck des gelösten Salzes im Vergleich zum Dampfdruck von Wasser sehr klein ist, wobei der Dampfdruck des gelösten Salzes z.B. höchstens etwa 10% oder insbesondere höchstens etwa 5% von jenem von Wasser betragen kann. Dabei kann das jeweilige Salz oder können die jeweiligen Salze der wässrigen Salzlösung beispielsweise aus der Gruppe der Salze gewählt werden, welche

- wenigstens ein Kation aus der Gruppe der Alkalimetalle, insbesondere aus der Gruppe Natrium ($Na^+$) und Kalium ($K^+$), der Erdalkalimetalle, z.B. aus der Gruppe Magnesium ($Mg^{2+}$) und Calcium ($Ca^{2+}$), und Ammonium ($NH_4^+$), und/oder
- wenigstens ein Anion aus der Gruppe der Halogenide, insbesondere Chlorid ($Cl^-$), der Nitrate ($NO_3^-$), der Sulfate ($SO_4^{2-}$), der Phosphate ($PO_4^{3-}$) und der Carboxylat-Anionen der Carbonsäuren, wie z.B. Tartrate oder dergleichen, enthalten. Beispiele vorteilhafter Salze umfassen hinsichtlich ihrer gesundheitlichen Unbedenklichkeit bei breiter kostengünstiger Verfügbarkeit insbesondere Natriumchlorid (Kochsalz, NaCl), aber z.B. auch Kaliumchlorid (KCl) oder Natriumkaliumtartrat (Seignettesalz, $KNaC_4H_4O_6 \cdot \cdot 4\,H_2O$), etc.

Das erfindungsgemäße Verfahren bietet sich grundsätzlich zur Herstellung von Partikelschaum-Formteilen aus praktisch beliebigen expandierten thermoplastischen Polymeren an, wie z.B. aus expandiertem Polyethylen (EPE) oder expandiertem Polypropylen (EPP), wobei es sich im besonderen Maße zur thermischen Verschweißung von expandierbaren Polymerschaumpartikeln aus expandiertem Polystyrol (EPS) anbietet, welche einen Schmelztemperaturbereich von etwa 120°C aufweisen und folglich eine entsprechende Verschweißungstemperatur erfordern, welche sich mit der erfindungsgemäßen Verwendung einer wässrigen Salzlösung als strahlungsabsorbierende Flüssigkeit auch bei sehr moderaten äußeren Drücken von etwa 0,5 bar problemlos erreichen lässt. Demnach können vorzugsweise mit wenigstens einem Treibmittel beladene, thermoplastische, expandierbare Polymerschaumpartikel eingesetzt werden, von welchen zumindest einige oder praktisch alle vornehmlich oder im Wesentlichen gänzlich aus expandierbarem Polystyrol (EPS) gebildet sind.

Wie bereits angedeutet, gibt das erfindungsgemäße Verfahren vornehmlich aufgrund der den Siedepunkt von Wasser erhöhenden Wirkung des erfindungsgemäßen Salzanteils der wässrigen Lösung in Verbindung mit der Expansion der Polymerschaumpartikel während ihres Erhitzens und der hiermit einhergehenden Verengung der Zwischenräume zwischen den Polymerschaumpartikeln, welche einen raschen Druckanstieg in diesen Zwischenräumen bewirken, insbesondere die Möglichkeit, dass die thermoplastischen expandierbaren Polymerschaumpartikel während der Einwirkung der hochfrequenten elektromagnetischen Strahlung anlässlich ihres Verschweißens zu dem Partikelschaum-Formteil mit einem Druck von höchstens etwa 2°bar, insbesondere von höchstens etwa 1,5 bar, vorzugsweise von höchstens etwa 1 bar, beispielsweise von höchstens etwa 0,8 bar oder von höchstens etwa 0,6 bar, beaufschlagt werden, so dass der Einsatz von hoch druckfesten und somit teuren Formwerkzeugen entbehrlich wird und zudem auch die Möglichkeit einer im Wesentlichen kontinuierlichen oder semikontinuierlichen Verfahrensführung besteht (siehe hierzu weiter unten).

Hierbei kann es sich gleichwohl als vorteilhaft erweisen, wenn der während der Einwirkung der hochfrequenten elektromagnetischen Strahlung aus der wässrigen Salzlösung erzeugte Wasserdampf zumindest teilweise aus den Zwischenräumen zwischen den Polymerschaumpartikeln abgeführt wird, um einerseits für eine schnelle Aufkonzentrierung der Salzlösung während des Verdampfens ihres Wasseranteils anlässlich der Einwirkung von hochfrequenter elektromagnetischer Strahlung und somit für eine schnelle Erhöhung des Siedepunktes der Lösung, andererseits für eine gewisse Selbsthemmung des Verschweißungsvorgangs zu sorgen (nachdem praktisch kein Wasserdampf mehr in den Zwischenräumen zwischen den Polymerschaumpartikeln vorhanden ist, werden letztere für Hochfrequenzstrahlung zunehmend transparent, so dass die Strahlung keine nennenswerte Erwärmung mehr zu bewirken vermag), wenn der Wasserdampf im Wesentlichen abgeführt worden ist. Zudem besteht in der Regel ein wirtschaftliches Interesse an einer unmittelbaren Weiterverwendung der erzeugten Partikelschaum-Formteile, ohne dass letztere beispielsweise getrocknet werden müssen.

Gemäß einer Ausführungsvariante kann beispielsweise vorgesehen sein, dass die thermoplastischen expandierbaren Polymerschaumpartikel in als solcher bekannter Weise in einem Formwerkzeug unter der Einwirkung der hochfrequenten elektromagnetischen Strahlung zu dem Partikelschaum-Formteil verschweißt werden, wobei das Formwerkzeug aus den obigen Gründen jedoch eine gegenüber dem Stand der Technik deutlich geringere Druckfestigkeit erfordert und folglich z.B. demgegenüber kostengünstiger aus entsprechenden Kunststoffen, welche für hochfrequente elektromagnetische Strahlung insbesondere im Mikrowellenspektrum weitgehend durchlässig sind. Darüber hinaus kann es sich aus den vorgenannten Gründen als zweckmäßig erweisen, wenn ein Formwerkzeug mit einer Mehrzahl an Entgasungsöffnungen verwendet wird, um für eine Abführung des erzeugten Wasserdampfes aus dem Formraum des Formwerkzeugs zu sorgen.

Gemäß einer alternativen Ausführungsvariante kann insbesondere auch vorgesehen sein, dass die thermoplastischen expandierbaren Polymerschaumpartikel nicht chargenweise mittels Formwerkzeugen, sondern im Wesentlichen kontinuierlich oder semikontinuierlich zu dem Partikelschaum-Formteil verschweißt werden, indem sie insbesondere zwischen umlaufende Trägerbänder aufgegeben werden. Zu diesem Zweck kann beispielsweise eine Vorrichtung zum kontinuierlichen Verschweißen von thermoplastischen expandierbaren Polymerschaumpartikeln zu einem thermoplastischen Partikelschaum-Formteil gemäß der eingangs zitierten EP 0 968 803 A2 zum Einsatz gelangen, welche hiermit zum Gegenstand der vorliegenden Offenbarung gemacht wird. Dementsprechend werden z.B. die mit der Salzlösung imprägnierten Polymerschaumpartikel zwischen umlaufende Trägerbändern einer solchen Vorrichtung aufgegeben und als dichte Packung mittels der Trägerbänder an einer oder mehreren Strahlungsquellen hochfrequenter elektromagnetischer Strahlung, z.B. in Form von Magnetrons zur Erzeugung von Mikrowellen, kontinuierlich vorbeigeführt und hierbei zu einem Endlos-Partikelschaum-Formteil verschweißt, welches sodann entsprechend abgelängt werden kann. Auch in diesem Fall kann der anlässlich der Einwirkung von Hochfrequenzstrahlung erzeugte Wasserdampf einfach aus dem Zwischenraum zwischen den Trägerbändern entweichen.

Darüber hinaus gibt das erfindungsgemäße Verfahren die Möglichkeit, dass die Verschweißungstemperatur während des Einwirkens der hochfrequenten elektromagnetischen Strahlung neben den herkömmlichen Steuerungsparametern, wie äußerer Druck, Leistung und Wellenlänge der Hochfrequenzstrahlung etc., insbesondere (auch) durch Einstellen von Anteil und/oder Art des wenigstens eines Salzes der wässrigen Salzlösung gesteuert wird. Dies basiert grundsätzlich auf dem Prinzip der Siedepunkterhöhung von Wasser durch gelöste Salze in Verbindung mit einer Druckerhöhung aufgrund der Verengung der Zwischenräume zwischen den Polymerschaumpartikel während ihres Expandierens unter Einwirkung der hochfrequenten elektromagnetischen Strahlung, so dass auf die Polymerschaumpartikel mit einer höheren Verschweißungstemperatur beaufschlagt werden. Ist der Dampfdruck des gelösten Salzes im Vergleich zum Dampfdruck des als Lösungsmittel verwendeten Wassers vernachlässigbar klein, so steht die Dampfdruckerniedrigung in direktem Verhältnis zur Konzentration des gelösten Salzes. Diese Reduktion des Dampfdruckes führt somit zu einer Erhöhung des Siedepunktes der Salzlösung gegenüber Wasser, wobei die Siedepunktserhöhung proportional zur Konzentration des gelösten Salzes ist. Die Abhängigkeit von dem Lösungsmittel - hier: Wasser - kann durch die sogenannte ebullioskopische Konstante $RT_S^2/\Lambda_S$ ausgedrückt werden, welche für Wasser einen Wert von etwa 34 besitzt, so dass für die Siedepunktserhöhung $\Delta T$ gilt:

$$\Delta T = \frac{RT_s^2}{\Lambda_S}\, c$$

mit R: allgemeine Gaskonstante,
$T_S$: Siedetemperatur des Lösungsmittels Wasser,
$\Lambda_S$: Verdampfungswärme, und
c: Konzentration des gelösten Salzes.

Mit der obigen Formel ist es somit möglich, die benötigte Konzentration verschiedener Salze oder Salzmischungen vorauszuberechnen, um die Siedetemperatur der Lösung gezielt zu modifizieren - jedenfalls so lange infolge von (teilweise) verdampftem Wasser unter Einwirkung der Hochfrequenzstrahlung während des Verschweißens der thermoplastischen Polymerschaumpartikel noch keine Sättigung der Salzlösung eingetreten ist.

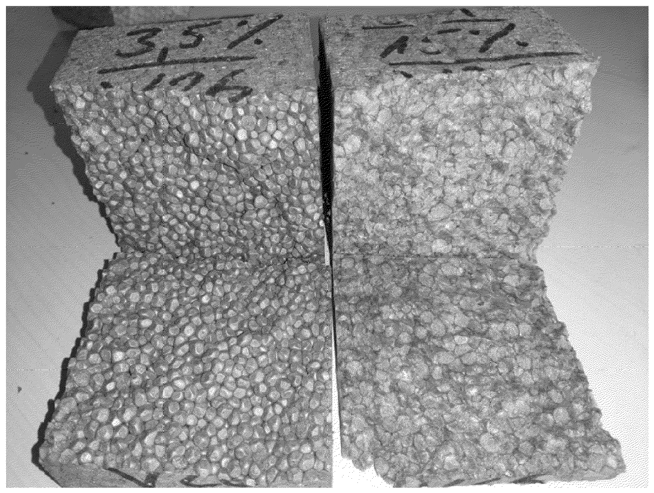

Nachstehend ist das erfindungsgemäße Verfahren anhand eines Ausführungsbeispiels unter Bezugnahme auf die Zeichnungen näher erläutert. Dabei zeigt die einzige Figur:
ein Foto jeweils eines Partikelschaum-Formteils aus expandiertem Polystyrol (EPS) im Bereich einer erzeug-Bruchebene, welche mittels eines erfindungsgemäßen Verfahrens unter Verwendung einer wässrigen Kochsalzlösung hergestellt worden sind, wobei das linke Formteil mittels einer 3,5%-igen Kochsalzlösung und das rechte Formteil mittels einer 15%-igen Kochsalzlösung hergestellt worden ist.

Ausführungsbeispiel:

Es wurden expandierbare Polymerschaumpartikel aus expandiertem Polystyrol (EPS) mit einer wässrigen Natriumchlorid- bzw. Kochsalzlösung gemischt und benetzt. Die benetzten Polymerschaumpartikel wurden einem für Mikrowellen transparenten Formwerkzeug aufgegeben und mechanisch gegeneinander verpresst, wonach das derart befüllte Formwerkzeug unter Bildung eines EPS-Partikelschaum-Formteils mit Mikrowellen bestrahlt worden ist.

Als Formwerkzeug diente bei diesem Experiment ein mit einer Mehrzahl an Entgasungsöffnungen versehener Zylinder aus Polypropylen (PP), welcher mit einem ebenfalls aus PP gefertigten Deckel derart verschlossen und mittels Kunststoffschrauben gesichert wurde, dass sich ein äußerer Andruck auf die Polymerschaumpartikel von etwa 0,5 bar ergab. Das derart befüllte Formwerkzeug wurde sodann in einen Mikrowellenofen gestellt, welcher ein Antennenarray von 8 mal 4 Hornantennen aufwies und bei welchem ein Wellenrührer für eine möglichst gleichmäßige Verteilung der Mikrowellenstrahlung in dem Ofen sorgte. Das derart befüllte Formwerkzeug wurde sodann mit Mikrowellen mit einer Frequenz von 2,45 GHz sowie mit einer Leistung von 12 kW über einen Zeitraum von etwa 20 s und 30 s bestrahlt, um die Polymerschaumpartikel zu dem Partikelschaum-Formteil zu verschwei-ßen. Der Druck in dem Formwerkzeug erhöhte sich während der Bestrahlung mit Mikrowellen um etwa 0,2 bar auf etwa 0,7 bar, wobei entstehender Wasserdampf zumindest teilweise über die Entgasungsöffnungen aus dem Formwerkzeug abgeführt worden ist. Schließlich wurde das Formwerkzeug dem Ofen entnommen und das erzeugte EPS-Partikelschaum-Formteil entformt.

Zu Vergleichszwecken wurden in der obigen Weise Partikelschaum-Formteile unter Einsatz von wässrigen Kochsalzlösungen mit verschiedenen Anteilen an Salz hergestellt, wobei einerseits eine 3,5%-ige Kochsalzlösung (3,5 Mass.-% Kochsalz bezogen auf 100 Mass.-% Lösung), andererseits eine 15%-ige Kochsalzlösung (15 Mass.-% Kochsalz bezogen auf 100 Mass.-% Lösung) verwendet wurde. Aus den jeweils erhaltenen Partikelschaum-Formteilen wurden Probenkörper zugeschnitten und wurde hieraus die Querzugfestigkeit ermittelt.

In der Zeichnung ist eine fotografische Darstellung der in der obigen Weise erzeugten EPS-Partikelschaum-Formteile im Bereich einer anlässlich der Ermittlung der Querzugfestigkeit erzeugten Bruchebene wiedergegeben, wobei das in der Figur linke Formteil mittels der 3,5%-igen Kochsalzlösung und das in der Figur rechte Formteil mittels der 15%-igen Kochsalzlösung hergestellt worden ist.

Man erkennt in beiden Fällen eine praktisch vollflächige Verbindung der expandierten Polymerschaumpartikel, wobei im Falle der 3,5-igen Kochsalzlösung (links) etwas weniger gerissene Polymerschaumpartikel als im Falle der 15%-igen Kochsalzlösung (rechts) erkennbar sind, was auf einen geringfügig höheren Verschweißungsgrad im Falle der 15%-igen Kochsalzlösung hindeutet. Gleichwohl wurden in beiden Fällen sehr hohe Querzugfestigkeiten der Probenkörper des Partikelschaum-Formteils von 198 kPa (entsprechend 0,198 N/mm$^2$) im Falle der 3,5%-igen Kochsalzlösung (links) bzw. von 207 kPa (entsprechend 0,207 N/mm$^2$) im Falle der 15%-igen Kochsalzlösung (rechts) ermittelt, was ebenfalls auf einen hohen Verschweißungsgrad bereits bei einer relativ geringen Kochsalzkonzentration der wässrigen Lösung von 3,5 Mass.-% (d.h. weniger als 10% der Sättigungsgrenze von Kochsalz in Wasser von etwa 36 Mass.-%) hinweist.

## Patentansprüche

1. Verfahren zum Verschweißen von thermoplastischen expandierbaren Polymerschaumpartikeln zu einem thermoplastischen Partikelschaum-Formteil, indem die expandierbaren Polymerschaumpartikel mit wenigstens einer hochfrequente elektromagnetische Strahlung absorbierenden Flüssigkeit benetzt und unter Einwirkung von hochfrequenter elektromagnetischer Strahlung, insbesondere im Mikrowellenspektrum, zumindest teilweise expandiert und miteinander zu dem Partikelschaum-Formteil verschweißt werden, **dadurch gekennzeichnet, dass** die hochfrequente elektromagnetische Strahlung absorbierende Flüssigkeit aus der Gruppe der wässrigen Salzlösungen mit einem Salzanteil von wenigstens 0,5 Mass.-% gewählt wird.

2. Verfahren nach Anspruch 1, **dadurch gekennzeichnet, dass** die hochfrequente elektromagnetische Strahlung absorbierende Flüssigkeit aus der Gruppe der wässrigen Salzlösungen mit einem Salzanteil von wenigstens 1 Mass.-%, insbesondere von wenigstens 2 Mass.-%, vorzugsweise von wenigstens 3 Mass.-%, gewählt wird.

3. Verfahren nach Anspruch 1 oder 2, **dadurch gekennzeichnet, dass** die hochfrequente elektromagnetische Strahlung absorbierende Flüssigkeit aus der Gruppe der wässrigen Salzlösungen gewählt wird, welche wenigstens ein Salz

   - mit wenigstens einem Kation aus der Gruppe der Alkalimetalle, insbesondere aus der Gruppe Natrium und Kalium, der Erdalkalimetalle und Ammonium ($NH_4^+$), und/oder
   - mit wenigstens einem Anion aus der Gruppe der Halogenide, insbesondere Chlorid, der Nitrate ($NO_3^-$), der Sulfate ($SO_4^{2-}$), der Phosphate ($PO_4^{3-}$) und der Carboxylat-Anionen der Carbonsäuren

   enthält.

4. Verfahren nach einem der Ansprüche 1 bis 3, **dadurch gekennzeichnet, dass** thermoplastische expandierbare Polymerschaumpartikel eingesetzt werden, von welchen zumindest einige vornehmlich aus expandierbarem Polystyrol (EPS) gebildet sind.

5.  Verfahren nach einem der Ansprüche 1 bis 4, **dadurch gekennzeichnet, dass** die thermoplastischen expandierbaren Polymerschaumpartikel während der Einwirkung der hochfrequenten elektromagnetischen Strahlung anlässlich ihres Verschweißens zu dem Partikelschaum-Formteil mit einem Druck von höchstens 2°bar, insbesondere von höchstens 1,5 bar, vorzugsweise von höchstens 1 bar, beaufschlagt werden.

6.  Verfahren nach einem der Ansprüche 1 bis 5, **dadurch gekennzeichnet, dass** der während der Einwirkung der hochfrequenten elektromagnetischen Strahlung aus der wässrigen Salzlösung erzeugte Wasserdampf zumindest teilweise aus den Zwischenräumen zwischen den Polymerschaumpartikeln abgeführt wird.

7.  Verfahren nach einem der Ansprüche 1 bis 6, **dadurch gekennzeichnet, dass** die thermoplastischen expandierbaren Polymerschaumpartikel in einem Formwerkzeug unter der Einwirkung der hochfrequenten elektromagnetischen Strahlung zu dem Partikelschaum-Formteil verschweißt werden, wobei insbesondere ein Formwerkzeug mit einer Mehrzahl an Entgasungsöffnungen verwendet wird.

8.  Verfahren nach einem der Ansprüche 1 bis 6, **dadurch gekennzeichnet, dass** die thermoplastischen, expandierbaren Polymerschaumpartikel im Wesentlichen kontinuierlich oder semikontinuierlich zu dem Partikelschaum-Formteil verschweißt werden, indem sie insbesondere zwischen umlaufende Trägerbänder aufgegeben werden.

9.  Verfahren nach einem der Ansprüche 1 bis 8, **dadurch gekennzeichnet, dass** die Verschweißungstemperatur der thermoplastischen, expandierbaren Polymerschaumpartikel durch Einstellen von Anteil und/oder Art des wenigstens eines Salzes der wässrigen Salzlösung gesteuert wird.

10. Partikelschaum-Formteil, hergestellt nach einem Verfahren nach einem der Ansprüche 1 bis 9.

Europäisches
Patentamt

European
Patent Office

Office européen
des brevets

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2024/200654 A1 (BASF SE [DE]) 3. Oktober 2024 (2024-10-03) | 1-4,10 | INV. B29C35/08 |
| Y | * Seite 3, Zeile 10; Ansprüche 1,11 * * Seite 19, Zeile 6 - Zeile 29 * * Seite 21, Zeile 17 - Zeile 23 * * Seite 17, Zeile 19 * ----- | 5-9 | B29C44/44 B29C44/34 |
| Y | US 2014/243442 A1 (COLES ANDREW [FR] ET AL) 28. August 2014 (2014-08-28) | 5-9 | |
| A | * Absatz [0651]; Tabelle 4 * ----- | 1-4,10 | |
| A | US 4 765 934 A (NAZAR STEVEN E [CA] ET AL) 23. August 1988 (1988-08-23) * Ansprüche 1, 2 * ----- | 1-10 | |
| A | US 6 358 459 B1 (ZIEGLER MAIK [DE] ET AL) 19. März 2002 (2002-03-19) * Spalte 3, Zeilen 35-55 * ----- | 1-10 | |

**RECHERCHIERTE SACHGEBIETE (IPC)**

B29C
C08J

Der vorliegende Recherchenbericht wurde für alle Patentansprüche erstellt

| Recherchenort | Abschlußdatum der Recherche | Prüfer |
|---|---|---|
| Den Haag | 11. April 2025 | Tortosa Masiá, A |

**ANHANG ZUM EUROPÄISCHEN RECHERCHENBERICHT
ÜBER DIE EUROPÄISCHE PATENTANMELDUNG NR.**

EP 24 20 7601

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-04-2025

| Im Recherchenbericht angeführtes Patentdokument | Datum der Veröffentlichung | Mitglied(er) der Patentfamilie | Datum der Veröffentlichung |
|---|---|---|---|
| WO 2024200654 A1 | 03-10-2024 | KEINE | |
| US 2014243442 A1 | 28-08-2014 | BR 112014008252 A2 | 18-04-2017 |
| | | CN 103974813 A | 06-08-2014 |
| | | EP 2763830 A1 | 13-08-2014 |
| | | JP 2014531352 A | 27-11-2014 |
| | | KR 20140090995 A | 18-07-2014 |
| | | US 2014243442 A1 | 28-08-2014 |
| | | WO 2013050581 A1 | 11-04-2013 |
| US 4765934 A | 23-08-1988 | KEINE | |
| US 6358459 B1 | 19-03-2002 | AT E214883 T1 | 15-04-2002 |
| | | DE 19860611 C1 | 23-03-2000 |
| | | EP 1016354 A1 | 05-07-2000 |
| | | JP 2000190394 A | 11-07-2000 |
| | | KR 20000048429 A | 25-07-2000 |
| | | US 6358459 B1 | 19-03-2002 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0968803 A2